# FASCICULE DE BREVET EUROPEEN

(11) **EP 2 561 711 B1**
(45) Date de publication et mention de la délivrance du brevet: **13.02.2019**
(21) Numéro de dépôt: 11731427.8
(22) Date de dépôt: 19.04.2011
(51) Int. Cl.: H04W 60/00, H04W 60/04

(54) **PROCEDE DE MODIFICATION D'UNE ZONE DE LOCALISATION D'UN TERMINAL**
VERFAHREN ZUR MODIFIZIERUNG EINES STANDORTBEREICHS EINES ENDGERÄTES
METHOD OF MODIFYING A ZONE OF LOCATION OF A TERMINAL

(30) Priorité: 25.06.2010 FR 1055124; 19.04.2010 FR 1052961
(43) Date de publication de la demande: 27.02.2013
(73) Titulaire: Orange, 75015 Paris (FR)
(72) Inventeur: HERBELIN, Philippe, F-94300 Vincennes (FR); PURGE, Serban, F-75020 Paris (FR)
(86) Numéro de dépôt international: PCT/FR2011/050895
(87) Numéro de publication internationale: WO 2011/131900

(56) Documents cités:
- EP-A2- 1 292 168
- WO-A1-00/03557
- WO-A1-95/11577
- GB-A- 2 449 228
- LON-RONG HU ET AL: "An adaptive location management scheme for global personal communications", 1995 FOURTH IEEE INTERNATIONAL CONFERENCE ON UNIVERSAL PERSONAL COMMUNICATIONS RECORD. GATEWAY TO THE 21ST. CENTURY. TOKYO, NOV. 6 - 10, 1995; [IEEE INTERNATIONAL CONFERENCE ON UNIVERSAL PERSONAL COMMUNICATIONS], NEW YORK, IEEE, US LNKD- DOI:10.1109/, vol. CONF. 4, 6 novembre 1995 (1995-11-06) , pages 950-954, XP010160680, ISBN: 978-0-7803-2955-3

## Description

### 1. Domaine de l'invention

L'invention s'inscrit dans le domaine de la localisation de terminaux de communication mobiles dans des réseaux de communication radio mobiles ou des réseaux de communication fixes. Plus spécifiquement, l'invention trouve une application particulière dans le cas où un terminal attaché à un réseau d'accès est capable de passer en mode veille et qu'il peut supporter une procédure de mise à jour de sa localisation dans le réseau.

De manière connue, une zone de localisation (Location Area) d'un réseau de communication représente une zone géographique dans laquelle un terminal peut se déplacer sans devoir mettre à jour sa localisation de manière régulière auprès d'un équipement VLR (*« Visitor Location Register »*) appartenant au réseau de communication mobile auprès duquel le terminal est enregistré.

Une zone de localisation peut comprendre une ou plusieurs cellules pouvant, par exemple, être conformes aux standards GERAN (pour « *GSM EDGE Radio Access Network* ») / *UTRAN* (pour UMTS Terrestrial Radio Access Network) ou *eUTRAN* (pour *evolved UTRAN*). Par exemple pour une cellule *GERAN* / *UTRAN* appartient à une seule zone de localisation à un moment donné.

Un identifiant de la zone de localisation à laquelle la cellule appartient est diffusé à destination de tous les terminaux présents dans une cellule par l'intermédiaire de certains équipements appartenant à la cellule comme une station de base ou un noeud d'accès au travers d'un canal de transmission dédié.

Dans le cadre de l'architecture 3GPP R8, une zone de traçage (en anglais « *tracking area* ») d'un réseau de communication mobile constitue une zone géographique dans laquelle un terminal peut se déplacer sans devoir mettre à jour sa localisation auprès d'un équipement de gestion de la mobilité dans le réseau (MME pour « *Mobility Management Entity* ») auprès duquel le terminal est enregistré.

Une liste des zones de traçage (en anglais « tracking list ») représente l'ensemble des zones de traçage dans lesquelles et entre lesquelles un terminal peut se déplacer sans devoir mettre à jour sa localisation de manière régulière auprès d'un équipement MME.

Ainsi, une liste des zones de traçage est associée à chaque terminal présent dans les zones de traçage. Toutes les zones de traçage d'une liste des zones de traçage sont contrôlées par un même équipement de gestion de la mobilité MME.

Une zone de traçage peut contenir une ou plusieurs cellules eUTRAN. Une cellule eUTRAN appartient à une seule zone de traçage à un instant donné. Un identifiant de la zone de traçage à laquelle une cellule appartient est diffusé dans la cellule, par l'intermédiaire de certains équipements qui composent cette cellule tels qu'une station de base.

### 2. Art antérieur

Les techniques antérieures supposent que le terminal ne peut appartenir qu'à une seule zone de localisation à un instant donné. Dès qu'un terminal passe en mode veille, pour réduire la consommation d'énergie et ainsi économiser la batterie, il identifie la zone de localisation où le changement d'état (le passage d'un mode de fonctionnement actif à un mode veille) a eu lieu, appelée par la suite zone de localisation initiale.

Dans les techniques connues, bien qu'il soit en mode veille, le terminal doit informer un noeud du réseau de sa zone de localisation de manière périodique ou lorsqu'il change de zone de localisation. A cette fin, un terminal en mode veille effectue une procédure de mise à jour de sa localisation (« Location Update » en anglais). Une telle procédure de mise à jour de localisation vise à informer un noeud du réseau de la zone de localisation ou de la zone de traçage dans laquelle le terminal est situé afin de permettre, le cas échéant, au réseau de transmettre des données au terminal comme un appel par exemple.

Or, la procédure de mise à jour de la zone localisation est consommatrice de ressource au niveau du terminal et plus particulièrement en énergie électrique, ce qui a pour effet de décharger la batterie du terminal plus rapidement (alors même que le mode veille est supposé réduire la consommation).

Les demandes de brevet WO 95/11577, GB 2449 228 et WO 00/03557 concernent des procédés de modification de la zone de localisation d'un terminal mais ils reposent sur des paramètres propres au terminal lui-même, qui doit les communiquer au réseau.

Ainsi, il existe un besoin d'une solution permettant de reconfigurer la zone de localisation du terminal lorsque celui-ci est en mode veille qui soit plus économes des ressources du terminal.

### 3. Résumé de l'invention

L'invention concerne un procédé de modification d'une zone de localisation affectée à un terminal courant attaché à un équipement appartenant à une première zone de localisation d'un réseau de communication, ledit équipement appartenant en outre à au moins une deuxième zone de localisation dudit réseau de communication, ladite première zone et ladite au moins une deuxième zone pouvant se recouvrir, le procédé comprenant les étapes suivantes mises en oeuvre par ledit équipement :
- une étape de diffusion, par l'intermédiaire d'un canal de diffusion, d'un identifiant de ladite première zone de localisation et d'une donnée complémentaire de localisation comprenant au moins un identifiant de ladite au moins une deuxième zone de localisation ;
- une étape de sélection, pour ledit terminal, parmi la première et ladite au moins une deuxième zone de localisation, d'une zone de localisation courante, en fonction de ladite donnée complémentaire de localisation et d'au moins un paramètre de sélection prédéterminé,
- une étape d'émission d'un message de commande à destination dudit terminal courant comprenant un identifiant de ladite zone de localisation courante ;
   où ledit au moins un paramètre de sélection prédéterminé est fonction dudit réseau de communication et appartient au groupe comprenant :
   - un niveau de charge des équipements composants le réseau de communication ;
   - un type d'équipement ayant assuré le passage en mode veille du terminal.

Ainsi, la zone de localisation du terminal peut être modifiée de manière circonstanciée. A la différence des techniques de l'art antérieur, la zone de localisation d'un terminal n'est pas modifiée en se basant uniquement sur l'identifiant de la zone de localisation qui est diffusé par les stations de base réparties dans les cellules composant la zone de localisation, mais également sur la base de données complémentaires de localisation. Cette technique permet de prendre en compte d'autres aspects que la seule localisation du terminal pour effectuer une modification de la zone de localisation, comme par exemple des conditions de transmission de données au sein du réseau.

Ainsi, une telle solution permet de réduire la consommation électrique du terminal en évitant que ce dernier ne soit obligé de mettre en oeuvre une procédure de mise à jour de localisation (« Location Update »).

Selon un mode de réalisation particulier, ladite donnée complémentaire de localisation varie au cours du temps.

Ainsi, la donnée de localisation complémentaire est adaptée aux circonstances.

A la différence des techniques antérieures, la modification de la zone de localisation peut être gérée en fonction de paramètres propres au réseau pour qu'il y ait une adaptation la plus parfaite possible de la zone de localisation à la situation du réseau. Ainsi, par exemple, lorsque la charge du réseau (c'est-à-dire le nombre d'appels passés ou reçus dans une ou plusieurs zone de localisation du réseau) est faible ou au contraire forte, il est possible d'ajouter, de supprimer et ou de mettre à jour les données complémentaires de localisation qui sont émises.

Selon un autre mode de réalisation, la zone de localisation peut être modifiée en fonction de paramètres horaires, comme par exemple un horaire dans la journée.

Selon un mode de réalisation particulier, ladite étape de sélection est mise en oeuvre par ledit réseau de communication lors d'une procédure de recherche dudit terminal par ledit réseau de communication.

Selon une caractéristique particulière ladite donnée complémentaire de localisation comprend une hiérarchisation de zones de localisation dudit réseau de communication.

Cette hiérarchisation peut être géographique ou logique.

Selon un autre aspect, l'invention concerne également un dispositif de modification d'une zone de localisation affectée à un terminal courant attaché à un équipement appartenant à une première zone de localisation d'un réseau de communication, ledit équipement appartenant en outre à au moins une deuxième zone de localisation dudit réseau de communication, ladite première zone et ladite au moins une deuxième zone pouvant se recouvrir, le dispositif comprenant les moyens suivants mis en oeuvre par ledit équipement,
- des moyens de diffusion, par l'intermédiaire d'un canal de diffusion, d'un identifiant de ladite première zone de localisation et d'une donnée complémentaire de localisation comprenant au moins un identifiant de ladite au moins une deuxième zone de localisation ;
- des moyens de sélection, pour ledit terminal, parmi la première et ladite au moins une deuxième zone de localisation, d'une zone de localisation courante, en fonction de ladite donnée complémentaire de localisation et d'au moins un paramètre de sélection prédéterminé,
- des moyens d'émission d'un message de commande à destination dudit terminal courant comprenant un identifiant de ladite zone de localisation courante ;
   où ledit au moins un paramètre de sélection prédéterminé est fonction dudit réseau de communication et appartient au groupe comprenant :
   - un niveau de charge des équipements composants le réseau de communication ;
   - un type d'équipement ayant assuré le passage en mode veille du terminal.

Selon un autre aspect, l'invention concerne également un produit programme d'ordinateur téléchargeable depuis un réseau de communication et/ou stocké sur un support lisible par ordinateur et/ou exécutable par un microprocesseur, et comprenant des instructions de code de programme pour l'exécution du procédé de modification tel que décrit précédemment.

Selon un autre aspect, l'invention concerne également un équipement appartenant à une première zone de localisation d'un réseau de communication et auquel est attaché un terminal courant, ledit équipement appartenant en outre à au moins une deuxième zone de localisation dudit réseau de communication, ladite première zone et ladite au moins une deuxième zone pouvant se recouvrir, l'équipement comprenant,
- des moyens de diffusion, par l'intermédiaire d'un canal de diffusion, d'un identifiant de ladite première zone de localisation et d'une donnée complémentaire de localisation comprenant au moins un identifiant de ladite au moins une deuxième zone de localisation ;
- des moyens de sélection, pour ledit terminal, parmi la première et ladite au moins une deuxième zone de localisation, d'une zone de localisation courante, en fonction de ladite donnée complémentaire de localisation et d'au moins un paramètre de sélection prédéterminé,
- des moyens d'émission d'un message de commande à destination dudit terminal courant comprenant un identifiant de ladite zone de localisation courante ;
   où ledit au moins un paramètre de sélection prédéterminé est fonction dudit réseau de communication et appartient au groupe comprenant :
   - un niveau de charge des équipements composants le réseau de communication ;
   - un type d'équipement ayant assuré le passage en mode veille du terminal.

L'invention propose de déterminer une zone de localisation courante d'un terminal en mode veille parmi un ensemble de zones de localisation en fonction de paramètres de sélection tels que décrits précédemment.

Il est alors possible, notamment lorsque le trafic dans le réseau est réduit, de choisir une zone de localisation associée au terminal de superficie plus grande, par exemple, afin de réduire le nombre de procédures de mise à jour sa zone de localisation du terminal.

La réduction du nombre de procédures de mise à jour permet de réduire les coûts des équipements du réseau en charge de ces procédures par la réduction de la capacité des machines et/ou par la réduction de la consommation d'énergie.

Cela permet également de réduire la consommation en énergie électrique des terminaux suite à la réduction du nombre de mises à jour de la zone de localisation.

Selon une caractéristique du procédé de modification objet de l'invention, le message de commande est transmis au cours d'une procédure de paging du terminal.

Selon une caractéristique du procédé de modification objet de l'invention, le message de commande est émis en réponse à un message de mise à jour de localisation émis par le terminal.

### 4. Liste des figures

D'autres caractéristiques et avantages apparaîtront à la lecture de modes de réalisation décrits en référence aux dessins dans lesquels :
- la figure 1 représente le regroupement des zones de localisation,
- la figure 2 représente un premier mode de mise en oeuvre de l'invention,
- la figure 3 représente un deuxième mode de mise en oeuvre de l'invention,
- la figure 4 décrit un terminal selon l'invention,
- la figure 5 décrit un dispositif de modification d'une zone de localisation selon l'invention.

### 5. Description de l'invention

### 5.1. Principe général de l'invention

Un des objets de l'invention est de réduire le nombre de mises à jour d'une zone de localisation (« Location Update ») d'un terminal auprès d'équipements du réseau en charge de mémoriser la zone de localisation du terminal. Ces mises à jour d'une zone de localisation d'un terminal sont nécessaires pour permettre l'exécution d'une procédure de paging lors d'un appel entrant vers le terminal. Elles sont cependant consommatrices de ressources.

Pour réduire le nombre de mises à jour d'une zone de localisation, le principe général de l'invention consiste à fournir au terminal, en plus d'un identifiant de la zone de localisation à laquelle il est actuellement attaché dite zone de localisation courante, une donnée complémentaire de localisation.

Plus spécifiquement, dans un mode de réalisation, la donnée complémentaire de localisation comprend un identifiant d'au moins une autre zone de localisation consistant par exemple en un groupe de zone de localisation qui réunit une ou plusieurs zones de localisation, dont la zone de localisation courante. Une zone de localisation consistant par exemple en un groupe de zones de localisation qui réunit une ou plusieurs zones de localisation est appelée zone de localisation maître.

Dans un mode de réalisation complémentaire, en complément d'un identifiant d'une zone maître, la donnée d'identification peut en outre, et de manière récursive, comprendre un identifiant d'une zone de localisation d'un rang supérieur à la zone de localisation maître, dite zone super-maître, qui est constituée d'un groupe de zone de localisation maître.

Le regroupement des zones de localisation peut être poursuivi, de manière récursive jusqu'à par exemple définir une zone de localisation globale correspondant à l'ensemble des zones de localisation d'une région ou d'un pays. L'important, dans le cadre de la présente divulgation, est que la transmission usuelle de l'identifiant de la zone de localisation courante dans laquelle se situe le terminal s'accompagne de la fourniture d'une donnée complémentaire de localisation comprenant un identifiant d'au moins autre une zone de localisation.

L'invention introduit une hiérarchisation des zones de localisation. Une portion de cette hiérarchie est transmise au terminal de communication sous la forme de la donnée complémentaire de localisation. Les zones de localisation sont hiérarchisées soit en fonction de leur taille, à la manière de poupées gigognes pour tenir compte de la géographie d'une ville ou d'un pays, par exemple une première zone de localisation peut couvrir une maison, cette première zone est incluse dans une deuxième zone de localisation qui couvre un quartier, cette deuxième zone de localisation pouvant à son tour être incluse dans une troisième zone de localisation qui couvre une ville incluse dans une quatrième zone de localisation qui couvre une région, etc. ; soit de manière logique, en fonction par exemple de la topologie des lieux dans le cas de zones de localisation sont par exemple contigües ou juxtaposées ,

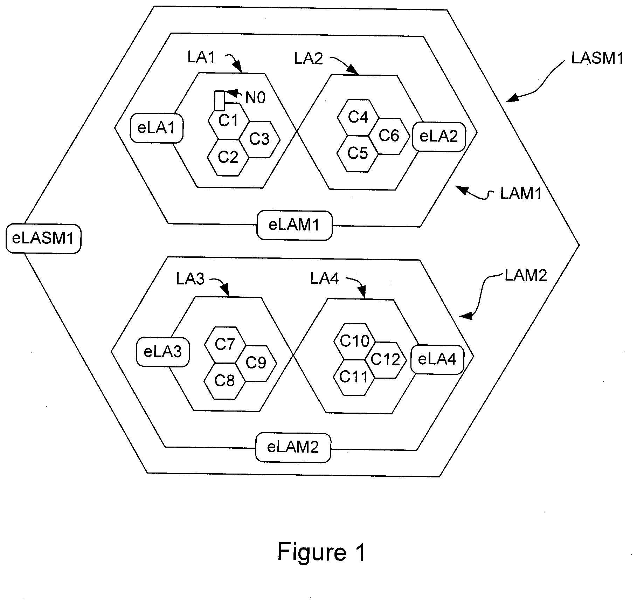

La figure 1 représente de manière schématique la manière dont les zones de localisation sont regroupées. Dans la figure 1, les zones de localisation sont notées « *LAx* », les zones de localisation maîtres sont notées « *LAMx* » et la zone de localisation super-maître est notée « LASM1». Les zones de localisation *LAx* comprennent des cellules, notées *Cx*. Dans le commentaire de la figure 1, « *x* » est utilisée pour désigner une référence quelconque. Par exemple, la zone de localisation LA1 comprend les cellules C1, C2 et C3. Chaque cellule est gérée par au moins un équipement (par exemple une station de base, non représenté).

Une zone de localisation *LAx* pour « Location Area ». Une zone de localisation *LAx* est composée de cellules voisines pouvant ou non se recouvrir. Les zones de localisation LAx sont uniques et désignées par un numéro ou tout autre système d'identification.

Une zone de localisation maître *LAMx* regroupe une ou plusieurs zones de localisation *LAx*. Elle est unique et désignée par un numéro ou tout autre système d'identification.

Une zone de localisation super-maître *LASMx* regroupe une ou plusieurs zones de localisation maîtres *LAMx*. Elle est unique et désignée par un numéro ou tout autre système d'identification.

Au sein du réseau, un équipement en charge de la gestion de la zone de localisation (appelé équipement *eLAx,* par exemple eLA1 pour la zone LA1) est en charge de transmettre des informations, telles que la zone de localisation que le terminal doit considérer lorsque ce dernier passe en mode veille, au terminal N0, comme par exemple la zone de localisation que le terminal devra considérer, lorsque ce dernier passe du mode connecté au mode veille pour réduire la consommation de la batterie Le terminal *N0* peut être un terminal mobile ou fixe qui peut être configuré en mode veille. La configuration d'un terminal qui passe en mode veille, dans le cadre de l'invention, consiste en la prise en compte de la zone de localisation dans laquelle il se trouve. D'autres opérations sont également mises en oeuvre lors du passage en mode veille, mais elles n'entrent pas dans le cadre de l'invention ; il s'agit d'extinction de l'écran du terminal par exemple.

Cette opération de configuration du passage en mode veille est réalisée lorsque le terminal *N0* est connecté à une cellule C1, par exemple, appartenant à la zone de localisation *LA1*. Lors de cette configuration, le terminal *N0* est informé qu'il est situé dans la zone de localisation *LA1* identifiée par un numéro de zone de localisation par exemple *LA1*, comme représenté à la figure 1.

Un équipement *eLAx* désigne un équipement en charge de la gestion d'une zone de localisation LAx.

Un équipement *eLAMx* désigne un équipement en charge de la gestion d'une zone de localisation maître *LAMx*.

Un équipement *eLASMx* désigne un équipement en charge de la gestion d'une zone de localisation super-maître *LASMx*.

Lorsque le terminal *N0* passe du mode connecté (actif) en mode veille, il connaît sa dernière zone de localisation (*LA1* dans notre exemple). Pour qu'un équipement du réseau puisse transmettre un appel entrant ver le terminal *N0*, le terminal *N0* doit périodiquement écouter un canal de diffusion comme par exemple un canal de paging propre à chaque cellule. Au travers de ce canal de paging ou d'un canal de diffusion le terminal *N0* reçoit des informations tel que l'identifiant de la dernière zone de localisation ainsi que la donnée complémentaire de localisation.

Lorsque le terminal *N0* identifie qu'il change de zone de localisation, il informe un équipement du réseau, comme par exemple l'équipement *eLA2,* de sa nouvelle zone de localisation.

Lorsque le terminal *N0* est configuré en mode veille il informe périodiquement un équipement du réseau, comme par exemple l'équipement eLA2, de l'identité de sa zone de localisation courante même si cette dernière n'a pas changé. Cela permet au réseau de s'assurer que le terminal *N0* n'est pas éteint et de mettre à jour les informations liées au terminal dans le réseau telles que la zone de localisation courante et la dernière cellule sous laquelle le terminal s'est connecté.

Dans le cadre de l'invention, chaque cellule diffuse une information de zone de localisation qui comprend non seulement l'identifiant de la zone de localisation à laquelle la cellule appartient, mais également l'identifiant de la zone de localisation maître LA Master et l'identifiant de la zone de localisation super maître LA Super Master. Par exemple, la cellule *C1* émet un message comprenant, en plus de l'identifiant de la zone de localisation LA1, les identifiants des zones de localisation suivantes: *LAM1* et *LASM1*. Ces deux identifiants constituent, selon l'invention, les données complémentaires de localisation fournies en plus de l'identifiant de la zone de localisation.

Toutes ces informations sont reçues par le terminal *N0* par l'intermédiaire des équipements en charge des cellules de la zone de localisation dans laquelle il se trouve, tels que des stations de base par exemple.

Pour toutes les procédures décrites ci-dessous, les décisions prises par les équipements du réseau (équipement *eLAx,* équipement *eLAMx* et équipement *eLASMx*) pour modifier la zone de localisation d'un terminal *N0* en mode veille sont prises en fonction de paramètres associés au terminal *N0* comme :
- la durée du mode veille,
- la vitesse de déplacement du terminal,
- La trajectoire du terminal au cours de son déplacement,
- le type de terminal *N0*,
- l'historique dans le temps du fonctionnement du terminal *N0*,
- ou tout autre paramètre pertinent lié au terminal *N0*.

Et/Ou en fonction de paramètres d'un équipement du réseau comme :
- horaire (nuit/jour),
- type de noeud qui a assuré le passage en mode veille du terminal *N0,*
- ou tout autre paramètre pertinent lié à l'équipement du réseau.

Selon un premier mode de mise à jour, la procédure de modification de la zone de localisation courante du terminal *N0* est déclenchée lors de l'enregistrement du terminal *N0* auprès d'un des équipements de gestion d'une zone de localisation. Dans ce cas, la procédure de modification est mise en oeuvre selon l'une des trois possibilités suivantes :
- Par l'équipement *eLAx* en charge de la zone de localisation *LAx*. Le terminal *N0* appartient à la zone de localisation *LAx.* Lors de l'enregistrement de la zone de localisation courante du terminal *N0* auprès de l'équipement *eLAx* en charge de la zone de localisation *LAx*, l'équipement *eLAx* informe le terminal que sa zone de localisation de rattachement a changé et qu'elle devient *LAMx*.
- Par l'équipement *eLAMx* en charge de la zone de localisation maître *LAMx*: Le terminal *N0* appartient à la zone de localisation *LAMx*. Lors de l'enregistrement de la zone de localisation courante du terminal *N0* auprès de l'équipement *eLAMx* en charge de la zone de localisation *LAMx*, l'équipement *eLAMx* informe le terminal que sa zone de localisation de rattachement à changé et qu'elle devient *LASMx*.
- Par l'équipement *eLASMx* en charge de la zone de localisation super maître *LASMx* : Le terminal *N0* appartient à la zone de localisation super-maître *LASMx*. Lors de l'enregistrement de la zone de localisation du terminal *N0* auprès de le l'équipement *eLASMx* en charge de la zone de localisation super-maître *LASMx*, l'équipement *eLASMx* informe le terminal que sa zone de localisation de rattachement à changé et qu'elle devient *LAMx* ou *LAx* (ce cas correspond à une modification de la zone de localisation pour la rendre plus précise).

Il est possible qu'un même équipement soit en charge de différentes zones de localisation. Par exemple, l'équipement *eLASMx* est en charge de la zone de localisation *LASMx* mais également de la zone de localisation *LAMxr.* La configuration du réseau en charge des zones de localisation est indépendante de la topologie / configuration de ces zones de localisation.

Selon un deuxième mode de mise à jour, la procédure de modification de la zone de localisation courante du terminal *N0* est déclenchée à l'initiative du réseau. Ce mode de réalisation comprend une étape de transmission d'un message (par exemple un message de paging) au terminal *N0*, par l'un des équipements en charge d'une zone de localisation. La transmission de ce message est réalisée depuis l'équipement *eLAx,* l'équipement *eLAMx* ou l'équipement *eLASMx* respectivement en charge de la zone de localisation correspondante (*LAx, LAMx* ou *LASMx*) via une cellule appartenant à la zone de localisation courante du terminal *N0* pour l'informer qu'il doit mettre en oeuvre une procédure de mise à jour d'une zone de localisation.

Suite à la réception de ce message, la modification effective de la zone de localisation du terminal est réalisée en mettant en oeuvre les étapes du procédé tel que décrit précédemment.

Dans ce mode de réalisation, il y a une seule procédure générale de mise à jour de la zone de localisation, mais cette méthode est déclenchée de deux manières différentes.

On décrit par la suite un mode de réalisation particulier de l'invention. Il est bien entendu que le mode de réalisation qui est décrit n'est nullement limitatif et que l'utilisation, par le terminal, de la donnée complémentaire qui est fournie par le réseau peut être faite selon d'autres protocoles que ceux décrits dans ce mode de réalisation.

### 5.2. Description d'un mode de réalisation

Le mode de réalisation décrit ci-dessous est implémenté dans un réseau reposant sur une architecture qui comprend une zone de localisation LA gérée par un équipement eLA appelée passerelle UFA_GW (de l'anglais pour « Ultra Flat Architecture Gateway ») et une zone de localisation *LAM1* gérée par un équipement eLAM appelée S-CSCF (*Serving-Call Session Control Function*).

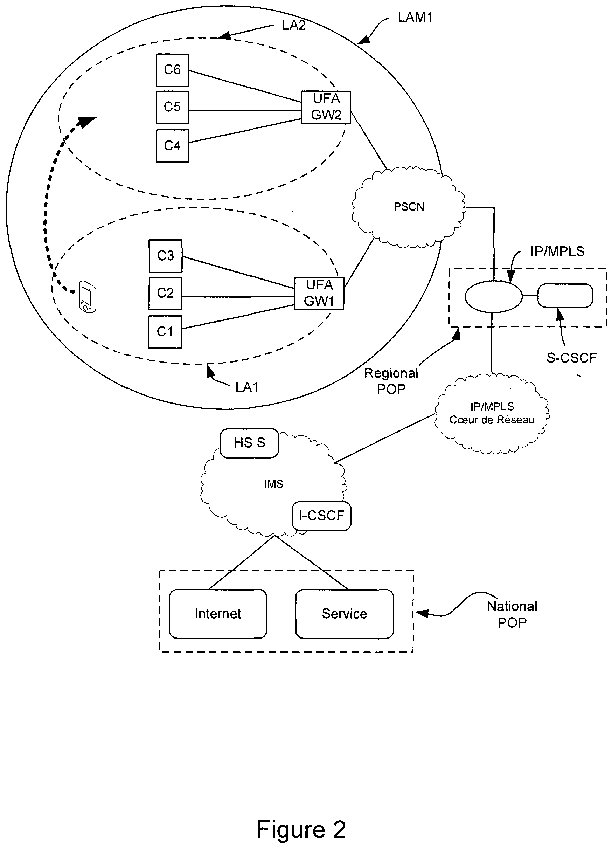

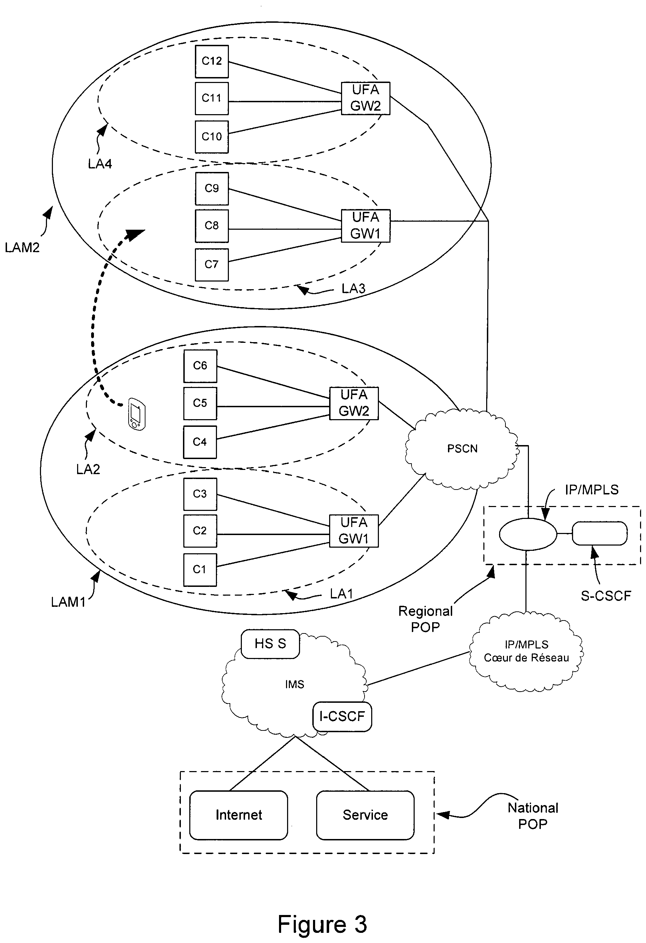

Une telle architecture est représentée à la figure 2 et à la figure 3. Cette architecture se place dans une architecture plus globale telle qu'une architecture de type IMS (de l'anglais pour *« IP Multimedia Subsystem »*) comprenant des serveurs SIP (« *Session Initiation Protocol* »). Dans l'architecture IMS, l'équipement S-CSCF est un équipement gérant des échanges de messages pour l'établissement de sessions applicatives. L'équipement S-CSCF est un proxy SIP qui met également en oeuvre des fonctions de contrôle de sessions.

Au sein de cette architecture UFA, un terminal *N0* est connecté à la passerelle *UFA_GW1* pour accéder au service Internet ou à tout autre service de l'opérateur gestionnaire du réseau. La passerelle *UFA_GW1* transmet des messages vers le terminal N0 conformément à un protocole de signalisation, par exemple : RRC (de l'anglais pour « Radio Resource Control ») permettant de configurer les paramètres radios dont fait partie l'identifiant de la zone de localisation. Au bout d'un temps d'inactivité, le terminal *N0* avant de passer en mode veille, informe la passerelle *UFA_GW1* de son changement d'état.

En réponse au terminal *N0* qui informe la passerelle *UFA_GW1* de son passage en mode veille, la passerelle *UFA_GW1* transmet l'identifiant de la zone de localisation que le terminal *N0* doit considérer comme étant sa zone de localisation, par exemple *LA1.*

Dans le cadre de l'invention, la passerelle *UFA_GW1* transmet le message suivant dans toutes les cellules appartenant à la zone de localisation *LA1*, sur le canal de paging de chaque cellule.

Un tel message comprend les identifiants « *cell x* » de la cellule courante du terminal, *LA1* de la zone de localisation *courante* à laquelle appartient la cellule et *LAM1* de la zone de localisation maître à laquelle appartient la zone de localisation courante *LA1*.

Les identifiants « *LA1* » et « *LAM1* » constituent les données complémentaires de localisation au sens de l'invention.

Le terminal *N0*, tant qu'il est situé dans la zone de localisation *LA1,* reçoit des informations de la part de chaque cellule incluse dans la zone de localisation *LA1*.

Le terminal *N0* considère donc la zone de localisation *LA1* comme sa zone de localisation courante. Lorsque que le terminal *N0* effectue une procédure de mise à jour de sa localisation (« location update ») quand il change de zone de localisation, par exemple en passant de la zone de localisation *LA1* à la zone de localisation *LA2*, il reçoit un message via le canal de paging ou du canal de diffusion d'une cellule de la zone de localisation *LA2* qui contient :
- les identifiants « *cell x* » de la cellule courante du terminal,
- *LA2* de la zone de localisation *LA2* à laquelle appartient la cellule et
- *LAM1* de la zone de localisation maitre à laquelle appartient la zone de localisation *LA2.*

En fonction des paramètres gérés par la passerelle *UFA_GW1 (horaire, type de noeud qui a assuré le passage en mode veille, etc.),* la passerelle *UFA_GW1* décide, dans ce mode de réalisation, que la zone de localisation la plus appropriée pour le terminal *N0* n'est plus la zone de localisation *LA1* mais la zone de localisation maître *LAM1.*

La passerelle UFA_GW1 effectue la procédure de mise à jour comprenant les étapes suivantes :
- une étape de déclenchement d'une procédure de paging du terminal *N0* au sein de la zone de localisation *LA1* pour que le terminal *N0* passe du mode de veille en mode connecté (actif) auprès de la passerelle *UFA_GW1* ;
- une étape de transmission, par la passerelle UFA_GW1, d'un message à destination du terminal *N0* pour l'informer que la zone de localisation à considérer n'est plus la zone de localisation *LA1* mais la zone de localisation maître *LAM1.* Ce message comprend la liste des zones de localisation et pointe vers la zone de localisation maître *LAM1*.
- une étape de transmission, par la passerelle *UFA_GW1*, à destination de l'équipement S-CSCF d'un message pour l'informer du changement de zone de localisation courante du terminal *N0*. Dans le cas d'un appel entrant pour le terminal *N0*, la procédure de paging pourra être déclenchée par l'équipement S-CSCF ou la passerelle *UFA_GW1* ;
- une étape de transmission, par la passerelle *UFA_GW1*, au terminal *N0*, d'une instruction de passage en mode veille ;
- une étape de modification de mode de fonctionnement du mode connecté en mode veille par le terminal *N0*. Le terminal *N0* effectue une supervision du canal de paging de chaque cellule la zone de localisation *LAM1* en considérant maintenant que la zone de localisation maître *LMA1* est la zone de localisation courante du terminal *N0* ;

Le terminal ne réalise donc plus de mise à jour de sa zone de localisation, même si il transite de la zone de localisation *LA1* vers la zone de localisation *LA2* puisque la zone de localisation *LA1* et la zone de localisation *LA2* appartiennent à la zone de localisation maître courante *LAM1* dans laquelle se situe le terminal *N0.*

Par rapport à l'exemple précédent où le terminal *N0* considérait la zone de localisation *LA1* comme zone de localisation courante du terminal *N0*, maintenant le terminal *N0* considère la zone de localisation maître *LAM1* comme nouvelle zone de localisation courante. Lorsque le terminal *N0* sort de la zone de localisation *LA1* pour passer dans la zone de localisation *LA2,* il reçoit les identifiants « *cell x* » de la cellule courante du terminal, *LA2* de la zone de localisation *LA2* à laquelle appartient la cellule et *LAM1* de la zone de localisation maître à laquelle appartient la zone de localisation LA2.

Mais comme la zone de localisation courante du terminal *N0* est la zone de localisation *LAM1* qui comprend la zone de localisation *LA1* et la zone de localisation *LA2,* le terminal *N0* n'effectue pas de procédure de mise à jour d'une zone de localisation.

La procédure de mise à jour d'une zone de localisation est déclenchée par le terminal *N0* lorsqu'il reçoit les identifiants « *cell x* » de la cellule courante du terminal, *LA3* de la zone de localisation *LA3* à laquelle appartient la cellule et *LAM2* de la zone de localisation maitre à laquelle appartient la zone de localisation *LA3*.via le canal de paging de la cellule de la zone de localisation *LA3.*

Dans un autre mode réalisation de l'invention, au lieu que la passerelle *UFA_GW1* déclenche une procédure de paging pour informer le terminal *N0* de la modification de sa zone de localisation courante, la passerelle *UFA_GW1* peut également attendre que le terminal *N0* effectue une procédure de réenregistrement auprès du réseau pour s'assurer de sa présence. La passerelle *UFA_GW1* effectue alors la procédure de mise à jour en mettant en oeuvre les étapes suivantes :
- une étape de réception d'une requête d'enregistrement du terminal *N0* auprès de l'équipement en charge de la zone de localisation *LA1* pour que le terminal *N0* assure de sa présence dans la zone.
- une étape de transmission, par la passerelle *UFA_GW1,* vers le terminal *N0,* d'un message l'informer que la zone de localisation à considérer n'est plus la zone de localisation *LA1* mais la zone de localisation maître *LAM1.*
- une étape de transmission, par la passerelle *UFA_GW1* d'un message vers l'équipement S-CSCF pour l'informer du changement de zone de localisation du terminal *N0*. Dans le cas d'un appel entrant pour le terminal *N0*, la procédure de paging peut être déclenchée par l'équipement S-CSCF ou la passerelle *UFA_GW1.*
- une étape de transmission, par la passerelle *UFA_GW1*, au terminal *N0*, d'une instruction de passage en mode veille ;
- une étape de modification de mode de fonctionnement du mode connecté en mode veille par le terminal *N0*. Le terminal *N0* effectue une supervision du canal de paging de chaque cellule la zone de localisation *LAM1* en considérant maintenant que la zone de localisation maître *LMA1* est la zone de localisation courante du terminal *N0* ;

Les procédures de mise à jour telles que décrites permettent d'effectuer une modification de la zone de localisation courante du terminal *N0* de manière croissante depuis la zone de localisation *LA1* vers la zone de localisation *LAM1* mais de manière décroissante depuis la zone de localisation *LAM1* vers la zone de localisation *LA1*.

Il est important de noter, dans le cadre de la présente divulgation, que la procédure proposée est bidirectionnelle. Cela signifie que la procédure permet d'augmenter la zone de localisation du terminal (en fournissant un identifiant d'une zone de localisation géographiquement ou logiquement plus importante) ou de la diminuer (en fournissant un identifiant d'une zone de localisation géographiquement ou logiquement moins importante).

Par exemple, lorsque le terminal ou l'équipement en charge de la zone de localisation courante du terminal constate qu'il est plus de 22 heures, il peut décider d'élargir sa zone de localisation. Pour ce faire, préalablement à sa mise en veille, il va effectuer une procédure de mise à jour d'une zone de localisation au cours de laquelle il indique au réseau de communication que la zone de localisation est désormais la zone de localisation maître LAM*x*, zone de localisation qui regroupe, en sus de la zone de localisation initiale *LAx* dans laquelle se trouve le terminal, par exemple deux ou trois autres zones de localisations. Ainsi, si le réseau doit transmettre une donnée durant la veille du terminal, il effectue une procédure de paging sur toutes les cellules qui composent la zone de localisation maître LAM*x*. Un tel cas de figure est particulièrement adapté en horaires de nuit (22h00 - 6h00), horaires pendant lequel le réseau de communication est peu chargé, et donc pendant lequel des procédures de paging peuvent être lancées à plus grande échelle (sur plusieurs zones de localisation à la fois) sans perturber le fonctionnement du réseau de communication.

Inversement, lorsque le terminal ou l'équipement en charge de la zone de localisation courante du terminal constate qu'il est plus de 6 heures, il peut décider de réduire sa zone de localisation. Pour ce faire, il va effectuer une procédure de mise à jour d'une zone de localisation dans laquelle il indique à un équipement du réseau de communication que la zone de localisation courante du terminal est désormais la zone de localisation LA*x*.

### 5.3. Mise à jour à l'initiative du terminal

Dans un mode de réalisation spécifique de l'invention, le terminal est à l'initiative de la modification de la zone de localisation courante à laquelle il appartient. Ce mode de réalisation est particulièrement bien adapté lorsque le terminal joue un rôle proactif au niveau du réseau de communication. L'un des inconvénients des réseaux de communication actuels est le fait qu'ils sont bâtis sur un principe de centralisation des prises de décision, ce qui implique d'une part la mise en oeuvre de matériels extrêmement coûteux et puissants dans ce qui est nommé le « coeur du réseau ». On a considéré, dans les architectures actuelles, que le réseau devait prendre les décisions relatives aux terminaux. Dans ce mode de réalisation spécifique, on propose que le terminal puisse être, au moins dans certains cas, à l'origine de la modification de la zone de localisation courante en décidant de lui-même de la zone de localisation dans laquelle il s'enregistre.

Dans ce mode de réalisation, la procédure de modification de la localisation comprend les étapes suivantes :
- une étape de diffusion, par un équipement en charge de la gestion de la zone de localisation courante du terminal et par l'intermédiaire d'un canal de diffusion, d'un identifiant de la zone de localisation courante et d'un ou plusieurs identifiant de zone de localisation maître et super-maître ;
- une étape de sélection, par le terminal, parmi les identifiants des zones de localisation transmis, d'une nouvelle zone de localisation en fonction d'au moins un paramètre de sélection prédéterminé par le terminal ;
- une étape de réception d'une requête d'enregistrement du terminal auprès de l'équipement en charge de la zone de localisation. Cette requête comprend l'identifiant de la zone de localisation choisie par le terminal parmi les identifiants transmis sur le canal de diffusion.
- une étape de transmission, depuis l'équipement en charge de la zone de localisation, vers le terminal, d'un message informant le terminal que la nouvelle zone de localisation sélectionnée par le terminal a été prise en compte.
   ∘ de manière complémentaire, afin de ne pas perturber le fonctionnement du réseau de communication, l'équipement en charge de la zone de localisation peut également transmettre au terminal un message l'informant que la zone de localisation sélectionnée par le terminal n'a pas été prise en compte tout en lui transmettant l'identifiant de la zone de localisation que le terminal doit utiliser.

L'équipement en charge de la zone de localisation informe par la suite les autres équipements de la nouvelle zone de localisation du terminal (qui est soit celle sélectionnée par le terminal soit celle imposée par l'équipement en charge).

Les paramètres de sélection prédéterminés auxquels le terminal se réfère sont par exemple :
- la durée du mode veille,
- la vitesse de déplacement du terminal,
- La trajectoire du terminal au cours de son déplacement,
- le type de terminal,
- l'historique dans le temps du fonctionnement du terminal,
- ou tout autre paramètre pertinent lié au terminal,
- horaire (nuit/jour),
- la charge de la batterie du terminal.

Ainsi, le terminal peut prendre en considération des paramètres dont le réseau n'a pas forcément connaissance. Il s'agit typiquement de la charge de la batterie du terminal. Le terminal peut augmenter la durée de charge de la batterie en sélectionnant de lui-même une zone de localisation géographiquement ou logiquement plus étendue que la zone de localisation courante dans laquelle il est enregistré. Dans ce mode de réalisation, le terminal n'a pas besoin d'autres données que celle qui sont déjà véhiculées par le réseau en relation avec l'invention : la présence des données complémentaire de localisation (sous la forme des identifiants des zones maître et super-maître) suffit. Le terminal utilise par la suite une requête d'enregistrement telle qu'elle est définit dans le standard mis en oeuvre.

### 5.4 Terminal et équipement en charge.

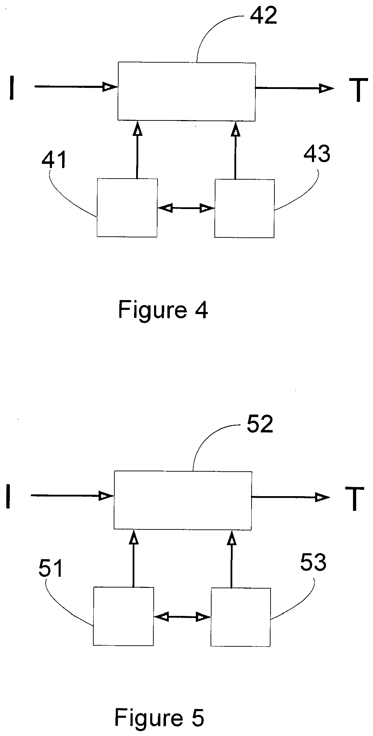

On présente, en relation avec la figure 4, un mode de réalisation d'un terminal de communication selon l'invention.

Un tel terminal comprend une mémoire 41 constituée d'une mémoire tampon, une unité de traitement 42, équipée par exemple d'un microprocesseur P, et pilotée par le programme d'ordinateur 43, mettant en oeuvre le procédé de modification selon l'invention.

A l'initialisation, les instructions de code du programme d'ordinateur 43 sont par exemple chargées dans une mémoire RAM avant d'être exécutées par le processeur de l'unité de traitement 42. L'unité de traitement 42 reçoit en entrée au moins une information I, telle que des identifiants de zones de localisation. Le microprocesseur de l'unité de traitement 42 met en oeuvre les étapes du procédé de modification décrit précédemment, selon les instructions du programme d'ordinateur 43, pour délivrer une information traitée T, telle que l'identifiant de la zone de localisation sélectionnée par ou pour le terminal, parmi les identifiants reçus. Pour cela, le terminal comprend, outre la mémoire tampon 41, des moyens de réception, par l'intermédiaire d'un canal de diffusion, d'un identifiant de la première zone de localisation et d'une donnée complémentaire de localisation comprenant au moins un identifiant d'au moins une deuxième zone de localisation et des moyens de des moyens de sélection, parmi la première et ladite au moins une deuxième zone de localisation, d'une zone de localisation courante, en fonction de la donnée complémentaire de localisation et d'au moins un paramètre de sélection prédéterminé. Ces moyens sont pilotés par le microprocesseur de l'unité de traitement 42.

On présente, en relation avec la figure 5, un mode de réalisation d'un dispositif de modification selon l'invention. Un tel dispositif peut être un équipement en charge d'une zone de localisation, une passerelle dans une architecture de type « UFA », telle que décrite précédemment.

Un tel dispositif comprend une mémoire 51 constituée d'une mémoire tampon, une unité de traitement 52, équipée par exemple d'un microprocesseur P, et pilotée par le programme d'ordinateur 53, mettant en oeuvre le procédé de modification selon l'invention.

A l'initialisation, les instructions de code du programme d'ordinateur 53 sont par exemple chargées dans une mémoire RAM avant d'être exécutées par le processeur de l'unité de traitement 52. L'unité de traitement 52 reçoit en entrée au moins une information I, telle qu'une requête d'enregistrement provenant d'un terminal. Le microprocesseur de l'unité de traitement 52 met en oeuvre les étapes du procédé de modification décrit précédemment, selon les instructions du programme d'ordinateur 53, pour délivrer une information traitée T, telle que l'identifiant de la zone de localisation sélectionnée par le dispositif pour un terminal donné. Pour cela, le dispositif comprend, outre la mémoire tampon 51, des moyens de diffusion, par l'intermédiaire d'un canal de diffusion, d'un identifiant de la première zone de localisation et d'une donnée complémentaire de localisation comprenant au moins un identifiant d'au moins une deuxième zone de localisation et des moyens de des moyens de sélection, parmi la première et ladite au moins une deuxième zone de localisation, d'une zone de localisation courante, en fonction de la donnée complémentaire de localisation et d'au moins un paramètre de sélection prédéterminé. Ces moyens sont pilotés par le microprocesseur de l'unité de traitement 52.

## Revendications

1. Procédé de modification d'une zone de localisation affectée à un terminal courant attaché à un équipement (UFA_GW1) appartenant à une première zone de localisation (LA1) d'un réseau de communication, ledit équipement appartenant en outre à au moins une deuxième zone de localisation (LAM1) dudit réseau de communication, ladite première zone et ladite au moins une deuxième zone pouvant se recouvrir, le procédé comprenant les étapes suivantes mises en oeuvre par ledit équipement :
- une étape de diffusion, par l'intermédiaire d'un canal de diffusion, d'un identifiant de ladite première zone de localisation (LA1) et d'une donnée complémentaire de localisation comprenant au moins un identifiant de ladite au moins une deuxième zone de localisation (LAM1);
- une étape de sélection, pour ledit terminal, parmi la première (LA1) et ladite au moins une deuxième (LAM1) zone de localisation, d'une zone de localisation courante (LA1, LAM1), en fonction de ladite donnée complémentaire de localisation et d'au moins un paramètre de sélection prédéterminé ;
- une étape d'émission d'un message de commande à destination dudit terminal courant comprenant un identifiant de ladite zone de localisation courante (LA1, LAM1) ;
le procédé étant **caractérisé en ce que** ledit au moins un paramètre de sélection prédéterminé est fonction dudit réseau de communication et appartient au groupe comprenant :
- un niveau de charge des équipements (S-CSCF) composants le réseau de communication ;
- un type d'équipement (UFA_GW1) ayant assuré le passage en mode veille du terminal.

2. Procédé selon la revendication 1, **caractérisé en ce que** ladite donnée complémentaire de localisation varie au cours du temps.

3. Procédé selon la revendication 1, **caractérisé en ce que** ladite étape de sélection est mise en oeuvre par ledit équipement lors d'une procédure de recherche dudit terminal par ledit réseau de communication.

4. Procédé selon la revendication 1, **caractérisé en ce que** ladite donnée complémentaire de localisation comprend une hiérarchisation de zones de localisation dudit réseau de communication.

5. Dispositif de modification d'une zone de localisation affectée à un terminal courant attaché à un équipement (UFA_GW1) appartenant à une première zone de localisation (LA1) d'un réseau de communication, ledit équipement appartenant en outre à au moins une deuxième zone de localisation (LAM1) dudit réseau de communication, ladite première zone et ladite au moins une deuxième zone pouvant se recouvrir, le dispositif comprenant les moyens suivants mis en oeuvre par ledit équipement :
- des moyens de diffusion, par l'intermédiaire d'un canal de diffusion, d'un identifiant de ladite première zone de localisation (LA1) et d'une donnée complémentaire de localisation comprenant au moins un identifiant de ladite au moins une deuxième zone de localisation (LAM1);
- des moyens de sélection, pour ledit terminal, parmi la première (LA1) et ladite au moins une deuxième (LAM1) zone de localisation, d'une zone de localisation courante (LA1, LAM1), en fonction de ladite donnée complémentaire de localisation et d'au moins un paramètre de sélection prédéterminé ;
- des moyens d'émission d'un message de commande à destination dudit terminal courant comprenant un identifiant de ladite zone de localisation courante (LA1, LAM1) ;
le dispositif étant **caractérisé en ce que** ledit au moins un paramètre de sélection prédéterminé est fonction dudit réseau de communication et appartient au groupe comprenant :
- un niveau de charge des équipements (S-CSCF) composants le réseau de communication ;
- un type d'équipement (UFA_GW1) ayant assuré le passage en mode veille du terminal.

6. Programme d'ordinateur **caractérisé en ce qu'**il comprend des instructions de code de programme pour la mise en oeuvre du procédé de modification selon l'une quelconque des revendications 1 à 4, lorsque ce programme est exécuté par un processeur.

7. Equipement (UFA_GW1) appartenant à une première zone de localisation (LA1) d'un réseau de communication et auquel est attaché un terminal courant, ledit équipement appartenant en outre à au moins une deuxième zone de localisation (LAM1) dudit réseau de communication, ladite première zone et ladite au moins une deuxième zone pouvant se recouvrir, l'équipement comprenant,
- des moyens de diffusion, par l'intermédiaire d'un canal de diffusion, d'un identifiant de ladite première zone de localisation (LA1) et d'une donnée complémentaire de localisation comprenant au moins un identifiant de ladite au moins une deuxième zone de localisation (LAM1);
- des moyens de sélection, pour ledit terminal, parmi la première (LA1) et ladite au moins une deuxième (LAM1) zone de localisation, d'une zone de localisation courante (LA1, LAM1), en fonction de ladite donnée complémentaire de localisation et d'au moins un paramètre de sélection prédéterminé ;
- des moyens d'émission d'un message de commande à destination dudit terminal courant comprenant un identifiant de ladite zone de localisation courante (LA1, LAM1);
l'équipement étant **caractérisé en ce que** ledit au moins un paramètre de sélection prédéterminé est fonction dudit réseau de communication et appartient au groupe comprenant :
- un niveau de charge des équipements (S-CSCF) composants le réseau de communication ;
- un type d'équipement (UFA_GW1) ayant assuré le passage en mode veille du terminal.

## Patentansprüche

1. Verfahren zur Modifizierung eines Standortbereichs, der einem aktuellen Endgerät zugeordnet ist, das mit einer Ausrüstung (UFA_GW1) verbunden ist, die zu einem ersten Standortbereich (LA1) eines Kommunikationsnetzes gehört, wobei die Ausrüstung außerdem zu mindestens einem zweiten Standortbereich (LAM1) des Kommunikationsnetzes gehört, wobei der erste Standortbereich und der mindestens eine zweite Standortbereich einander überdecken können, wobei das Verfahren die folgenden Schritte umfasst, die von der Ausrüstung durchgeführt werden:
- einen Diffusionsschritt, mit Hilfe eines Diffusionskanals, eines Identifikators des ersten Standortbereichs (LA1) und eines komplementären Standortdatenwerts, umfassend mindestens einen Identifikator des mindestens einen zweiten Standortbereichs (LAM1);
- einen Auswahlschritt, für das Endgerät, unter dem ersten (LA1) und dem mindestens einen zweiten (LAM1) Standortbereich, eines aktuellen Standortbereichs (LA1, LAM1) als Funktion des komplementären Standortdatenwerts und mindestens eines vorherbestimmten Auswahlparameters;
- einen Sendeschritt einer Steuernachricht mit dem Ziel des aktuellen Endgeräts, umfassend einen Identifikator des aktuellen Standortbereichs (LA1, LAM1);
wobei das Verfahren **dadurch gekennzeichnet ist, dass** der mindestens eine vorherbestimmte Auswahlparameter eine Funktion des Kommunikationsnetzes ist und zur Gruppe gehört umfassend:
- einen Ladezustand der Ausrüstungen (S-CSCF), die das Kommunikationsnetz bilden;
- einen Typ der Ausrüstung (UFA_GW1), der den Übergang in einen Ruhezustand der Ausrüstung sichergestellt hat.

2. Verfahren nach Anspruch 1,
**dadurch gekennzeichnet, dass** der komplementäre Standortdatenwert im Lauf der Zeit variiert.

3. Verfahren nach Anspruch 1,
**dadurch gekennzeichnet, dass** der Auswahlschritt von der Ausrüstung bei einem Suchvorgang des Endgeräts durch das Kommunikationsnetz durchgeführt wird.

4. Verfahren nach Anspruch 1,
**dadurch gekennzeichnet, dass** der komplementäre Standortdatenwert eine Hierarchisierung von Standortbereichen des Kommunikationsnetzes umfasst.

5. Vorrichtung zur Modifizierung eines Standortbereichs, der einem aktuellen Endgerät zugeordnet ist, das mit einer Ausrüstung (UFA_GW1) verbunden ist, die zu einem ersten Standortbereich (LA1) eines Kommunikationsnetzes gehört, wobei die Ausrüstung außerdem zu mindestens einem zweiten Standortbereich (LAM1) des Kommunikationsnetzes gehört, wobei der erste Standortbereich und der mindestens eine zweite Standortbereich einander überdecken können, wobei die Vorrichtung die folgenden Mittel umfasst, die von der Ausrüstung ausgeführt werden:
- Diffusionsmittel, mit Hilfe eines Diffusionskanals, eines Identifikators des ersten Standortbereichs (LA1) und eines komplementären Standortdatenwerts, umfassend mindestens einen Identifikator des mindestens einen zweiten Standortbereichs (LAM1);
- Auswahlmittel, für das Endgerät, unter dem ersten (LA1) und dem mindestens einen zweiten (LAM1) Standortbereich, eines aktuellen Standortbereichs (LA1, LAM1) als Funktion des komplementären Standortdatenwerts und mindestens eines vorherbestimmten Auswahlparameters;
- Sendemittel einer Steuernachricht mit dem Ziel des aktuellen Endgeräts, umfassend einen Identifikator des aktuellen Standortbereichs (LA1, LAM1);
wobei die Vorrichtung **dadurch gekennzeichnet ist, dass** der mindestens eine vorherbestimmte Auswahlparameter eine Funktion des Kommunikationsnetzes ist und zur Gruppe gehört umfassend:
- einen Ladezustand der Ausrüstungen (S-CSCF), die das Kommunikationsnetz bilden;
- einen Typ der Ausrüstung (UFA_GW1), der den Übergang in einen Ruhezustand der Ausrüstung sichergestellt hat.

6. Computerprogramm,
**dadurch gekennzeichnet, dass** dieses Programmcodeinstruktionen zur Durchführung des Modifizierungsverfahrens nach einem der Ansprüche 1 bis 4 umfasst, wenn dieses Programm von einem Prozessor ausgeführt wird.

7. Ausrüstung (UFA_GW1), welche zu einem ersten Standortbereich (LA1) eines Kommunikationsnetzes gehört, und mit welcher ein aktuelles Endgerät verbunden ist, wobei die Ausrüstung außerdem zu mindestens einem zweiten Standortbereich (LAM1) des Kommunikationsnetzes gehört, wobei der erste Standortbereich und der mindestens eine zweite Standortbereich einander überdecken können, wobei die Ausrüstung umfasst:
- Diffusionsmittel, mit Hilfe eines Diffusionskanals, eines Identifikators des ersten Standortbereichs (LA1) und eines komplementären Standortdatenwerts, umfassend mindestens einen Identifikator des mindestens einen zweiten Standortbereichs (LAM1);
- Auswahlmittel, für das Endgerät, unter dem ersten (LA1) und dem mindestens einen zweiten (LAM1) Standortbereich, eines aktuellen Standortbereichs (LA1, LAM1) als Funktion des komplementären Standortdatenwerts und mindestens eines vorherbestimmten Auswahlparameters;
- Sendemittel einer Steuernachricht mit dem Ziel des aktuellen Endgeräts, umfassend einen Identifikator des aktuellen Standortbereichs (LA1, LAM1);
wobei die Ausrüstung **dadurch gekennzeichnet ist, dass** der mindestens eine vorherbestimmte Auswahlparameter eine Funktion des Kommunikationsnetzes ist und zur Gruppe gehört umfassend:
- einen Ladezustand der Ausrüstungen (S-CSCF), die das Kommunikationsnetz bilden;
- einen Typ der Ausrüstung (UFA_GW1), der den Übergang in einen Ruhezustand der Ausrüstung sichergestellt hat.

## Claims

1. Method for modifying a location area assigned to a current terminal attached to a device (UFA_GW1) belonging to a first location area (LA1) of a communication network, said device furthermore belonging to at least one second location area (LAM1) of said communication network, said first area and said at least one second area being able to overlap, the method comprising the following steps implemented by said device:
- a step of broadcasting, by way of a broadcasting channel, an identifier of said first location area (LA1) and an additional item of location data comprising at least one identifier of said at least one second location area (LAM1);
- a step of selecting, for said terminal, from among the first location area (LA1) and said at least one second location area (LAM1), a current location area (LA1, LAM1) on the basis of said additional item of location data and of at least one predetermined selection parameter;
- a step of sending a control message to said current terminal, comprising an identifier of said current location area (LA1, LAM1);
the method being **characterized in that** said at least one predetermined selection parameter depends on said communication network and belongs to the group comprising:
- a level of charge of the devices (S-CSCF) forming the communication network;
- a type of device (UFA_GW1) that has switched the terminal into standby mode.

2. Method according to Claim 1, **characterized in that** said additional item of location data varies over time.

3. Method according to Claim 1, **characterized in that** said selection step is implemented by said device during a procedure of searching for said terminal by said communication network.

4. Method according to Claim 1, **characterized in that** said additional item of location data comprises a hierarchization of location areas of said communication network.

5. Apparatus for modifying a location area assigned to a current terminal attached to a device (UFA_GW1) belonging to a first location area (LA1) of a communication network, said device furthermore belonging to at least one second location area (LAM1) of said communication network, said first area and said at least one second area being able to overlap, the apparatus comprising the following means implemented by said device:
- means for broadcasting, by way of a broadcasting channel, an identifier of said first location area (LA1) and an additional item of location data comprising at least one identifier of said at least one second location area (LAM1);
- means for selecting, for said terminal, from among the first location area (LA1) and said at least one second location area (LAM1), a current location area (LA1, LAM1) on the basis of said additional item of location data and of at least one predetermined selection parameter;
- means for sending a control message to said current terminal, comprising an identifier of said current location area (LA1, LAM1);
the apparatus being **characterized in that** said at least one predetermined selection parameter depends on said communication network and belongs to the group comprising:
- a level of charge of the devices (S-CSCF) forming the communication network;
- a type of device (UFA_GW1) that has switched the terminal into standby mode.

6. Computer program, **characterized in that** it comprises program code instructions for implementing the modification method according to any one of Claims 1 to 4 when this program is executed by a processor.

7. Device (UFA_GW1) belonging to a first location area (LA1) of a communication network and to which a current terminal is attached, said device furthermore belonging to at least one second location area (LAM1) of said communication network, said first area and said at least one second area being able to overlap, the device comprising:
- means for broadcasting, by way of a broadcasting channel, an identifier of said first location area (LA1) and an additional item of location data comprising at least one identifier of said at least one second location area (LAM1);
- means for selecting, for said terminal, from among the first location area (LA1) and said at least one second location area (LAM1), a current location area (LA1, LAM1) on the basis of said additional item of location data and of at least one predetermined selection parameter;
- means for sending a control message to said current terminal, comprising an identifier of said current location area (LA1, LAM1);
the device being **characterized in that** said at least one predetermined selection parameter depends on said communication network and belongs to the group comprising:
- a level of charge of the devices (S-CSCF) forming the communication network;
- a type of device (UFA_GW1) that has switched the terminal into standby mode.
